# FASCICULE DE BREVET EUROPEEN

(11) **EP 3 863 684 B1**
(45) Date de publication et mention de la délivrance du brevet: **04.01.2023**
(21) Numéro de dépôt: 19818240.4
(22) Date de dépôt: 08.11.2019
(51) Int. Cl.: A61K 51/00, G21G 4/00, G21G 4/08, C07B 59/00, G21G 1/00

(54) **PROCÉDÉ DE TRANSFERT D'UN RADIOISOTOPE ENTRE DEUX PHASES STATIONNAIRES CONTENUES DANS DEUX COLONNES DE CHROMATOGRAPHIE**
VERFAHREN ZUM TRANSFER EINES RADIOISOTPES ZWISCHEN ZWEI STATIONÄREN PHASEN IN ZWEI CHROMATOGRAPHIE-SÄULEN
PROCESS FOR THE TRANSFER OF A RADIOISOTPE BETWEEN TWO STATIONARY PHASES CONTAINED IN TWO CHROMATOGRAPHIC COLUMNS

(30) Priorité: 15.11.2018 FR 1860562
(43) Date de publication de la demande: 18.08.2021
(73) Titulaire: Orano Med, 92320 Chatillon (FR)
(72) Inventeur: TORGUE, Julien, Gaithersburg, MD 20878 (US); DUREAU, Rémy, 87510 SAINT-GENCE (FR)
(74) Mandataire: Brevalex
(86) Numéro de dépôt international: PCT/FR2019/052676
(87) Numéro de publication internationale: WO 2020/099770

(56) Documents cités:
- EP-A1- 3 174 068
- WO-A2-2008/108888
- US-A1- 2003 219 366

## Description

### DOMAINE TECHNIQUE

L'invention se rapporte au domaine de la production d'isotopes radioactifs, aussi dits radioisotopes.

Plus spécifiquement, elle se rapporte à un procédé qui permet de transférer un radioisotope qui est fixé sur une première phase stationnaire contenue dans une première colonne de chromatographie vers une deuxième phase stationnaire contenue dans une deuxième colonne de chromatographie en vue de fixer ce radioisotope sur cette deuxième phase stationnaire.

Ce procédé peut notamment être mis en œuvre pour assurer une maintenance préventive de générateurs de radioisotopes et, en particulier, de générateurs de radium-224 dans lesquels le radium-224 est produit par décroissance radioactive du thorium-228.

À ce titre, il est susceptible de trouver des applications dans la fabrication de radiopharmaceutiques à base de plomb-212 ou de bismuth-212, utiles en médecine nucléaire et, en particulier, en radiothérapie alpha ciblée pour le traitement des cancers.

### ÉTAT DE LA TECHNIQUE ANTÉRIEURE

La radiothérapie alpha ciblée, aussi appelée alphathérapie ciblée, consiste à injecter un isotope radioactif lié à un vecteur, tel qu'un anticorps, capable de cibler très précisément des sites spécifiques présents à la surface de cellules cancéreuses. L'énergie alpha émise par la décroissance radioactive naturelle du radioisotope permet alors de détruire les cellules cancéreuses en limitant les dommages sur les cellules saines environnantes.

Certains descendants du thorium-232 et, en particulier, le plomb-212 et le bismuth-212, qui est le radioisotope fils du plomb-212, sont susceptibles d'être utilisés en alphathérapie ciblée, notamment dans le traitement des cancers du pancréas, des autres cancers intrapéritonéaux et des mélanomes, maladies pour lesquelles l'alphathérapie ciblée a fait l'objet de tests précliniques, en particulier aux USA.

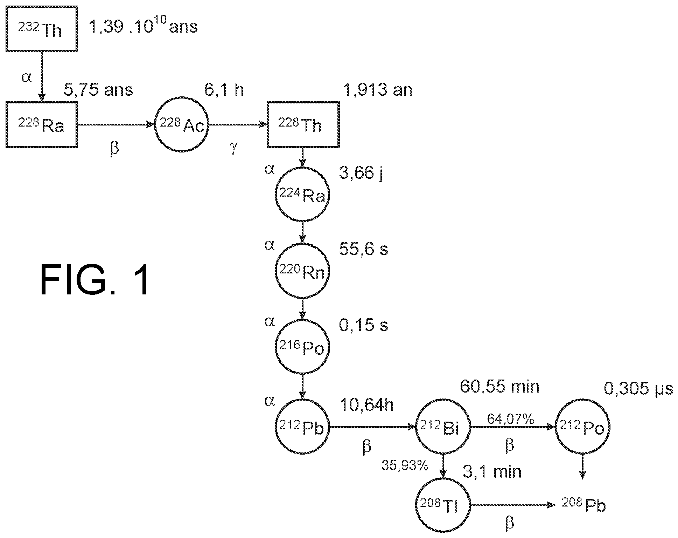

Comme le montre la figure 1 jointe en annexe qui représente la chaîne de décroissance, aussi dite de désintégration, naturelle du thorium-232 dans laquelle s'inscrivent le plomb-212 et le bismuth-212 :
- le plomb-212 peut être produit par décroissance radioactive du radium-224,
- le radium-224 peut être produit par décroissance radioactive du thorium-228,
- le thorium-228 peut être produit par décroissance radioactive du radium-228, tandis que
- le radium-228 peut être produit par décroissance radioactive du thorium-232 qui représente le composant majeur du thorium naturel que l'on extrait de minerais comme la monazite ou la thorite.

La production du radium-224 peut être réalisée au moyen de ce que l'on appelle un « générateur » de radium-224, c'est-à-dire une colonne de chromatographie qui comprend typiquement une phase stationnaire solide sur laquelle est fixé du thorium-228 et qui est régulièrement lavée avec une phase liquide permettant d'éluer sélectivement le radium-224 qui se forme par décroissance radioactive du thorium-228.

Un matériau de phase stationnaire pouvant notamment être utilisé dans un générateur de radium-224 est, par exemple, celui proposé par les sociétés Triskem International et Eichrom, sous l'appellation « Résine DGA DN », pour la séparation par chromatographie d'actinides tri- et tétravalents et, notamment, de l'américium et de l'actinium. Cette résine est constituée de particules en un polyméthacrylate fonctionnalisé par un diglycolamide à chaînes linéaires, à savoir le *N,N,N',N'*-tétraoctyl-diglycolamide, plus connu sous le nom de TODGA.

Une limite au fonctionnement d'un générateur de radium-224 comprenant une phase stationnaire constituée d'une telle résine est liée au fait que la résine se dégrade progressivement par radiolyse, ce qui affecte peu à peu sa capacité à retenir le thorium-228 et aboutit après une certaine période d'utilisation du générateur à l'apparition de fuites en thorium-228 car la résine a trop perdu en capacité de rétention pour pouvoir retenir complètement ce radioélément.

Ce processus de dégradation par radiolyse de la résine oblige donc à effectuer une maintenance régulière du générateur sous la forme d'élutions qui visent principalement à éliminer de la résine les descendants du thorium-228 à vie courte qui sont responsables de la radiolyse, notamment de par leur rayonnement alpha, et limite l'activité maximale de thorium-228 susceptible d'être fixée par gramme de résine (qui, au-delà d'un certain seuil, nécessiterait une fréquence d'élutions irréalisable).

Toutefois, il s'avère que, même en soumettant le générateur à une maintenance régulière pour prévenir l'apparition de fuites en thorium-228, il arrive un moment où la dégradation de la résine est telle que l'apparition de fuites en thorium-228 ne peut plus être empêchée et où, par conséquent, le générateur de radium-224 doit être mis au rebut. Or, la demi-vie du thorium-228 étant de 1,9 an, cette mise au rebut survient bien avant que la moitié du thorium-228 présent dans le générateur ait pu se désintégrer en radium-224.

Les Inventeurs se sont fixé pour but de trouver une solution à ce problème.

Or, dans le cadre de leurs travaux, les Inventeurs ont constaté qu'il est possible de transférer le thorium-228, qui est fixé sur une première phase stationnaire, telle que la phase stationnaire d'un générateur usagé de radium-224, vers une deuxième phase stationnaire de même constitution ou non que la première phase stationnaire mais vierge de toute utilisation antérieure et ce, sans perte notable de thorium-228 au cours de ce transfert. La deuxième colonne de chromatographie dans laquelle se trouve la deuxième phase stationnaire peut alors servir, à son tour, de générateur de radium-224.

Ils ont également constaté qu'il est possible de transférer de la même manière et avec la même efficacité un radioisotope autre que le thorium-228 comme un radioisotope du radium, du plomb, du bismuth ou de l'uranium, d'une première phase stationnaire vers une deuxième phase stationnaire. En particulier, le radioisotope pour lequel le procédé de l'invention est également applicable peut être choisi parmi le radium-228, le radium-224, le plomb-212, le bismuth-212 et le bismuth-213.

Et c'est sur ces constatations qu'est basée l'invention.

### EXPOSÉ DE L'INVENTION

L'invention propose donc un procédé qui permet de transférer un radioisotope fixé sur une première phase stationnaire contenue dans une première colonne de chromatographie vers une deuxième phase stationnaire contenue dans une deuxième colonne de chromatographie, pourfixer le radioisotope sur la deuxième phase stationnaire, le radioisotope étant choisi parmi les isotopes radioactifs du thorium, du radium, du plomb, du bismuth et de l'uranium, lequel procédé comprend au moins les étapes suivantes :
a) élution du radioisotope de la première phase stationnaire avec une solution aqueuse A1 comprenant un agent complexant le radioisotope, moyennant quoi on obtient une solution aqueuse A2 qui comprend des complexes du radioisotope ;
b) dissociation des complexes du radioisotope présents dans la solution aqueuse A2 par modification du pH de la solution aqueuse A2, moyennant quoi on obtient une solution aqueuse A3 comprenant le radioisotope décomplexé ;
c) chargement de la deuxième phase stationnaire avec la solution aqueuse A3 ; et
d) au moins un lavage de la deuxième phase stationnaire avec une solution aqueuse A4.

Ainsi, selon l'invention, on transfère le radioisotope qui est fixé sur la première phase stationnaire vers la deuxième stationnaire en éluant ce radioisotope de la première phase stationnaire au moyen d'une solution aqueuse qui comprend un agent qui va éluer le radioisotope de la première phase stationnaire par complexation ou chélation (les deux termes étant considérés ici comme synonymes), puis, après dissociation des complexes du radioisotope présents dans l'éluat ainsi obtenu, en refixant le radioisotope décomplexé sur la deuxième phase stationnaire.

Dans ce qui précède et ce qui suit, on considère qu'un radioisotope est fixé sur une phase stationnaire lorsqu'il est retenu par cette phase par complexation ou chélation, échange d'ions, reconnaissance moléculaire ou tout autre mécanisme n'impliquant pas l'existence de liaisons covalentes entre le radioisotope et la phase stationnaire.

Conformément à l'invention, l'agent complexant (ou chélatant) présent dans la solution aqueuse A1 est, de préférence, un acide aminopolycarboxylique ou un sel d'un acide aminopolycarboxylique.

Ainsi, il peut notamment s'agir de l'acide nitrilotriacétique (ou NTA), de l'acide éthylènediaminetétraacétique (ou EDTA), de l'acide diéthylènetriaminepentaacétique (ou DTPA) ou de l'un de leurs sels, préférence étant, toutefois, donnée à l'EDTA et à ses sels tels que ses sels de sodium.

Aussi, la solution aqueuse A1 est-elle préférentiellement une solution qui comprend de l'EDTA ou un sel de celui-ci, à une concentration avantageusement comprise entre 10 mmol/L à 100 mmol/L et, mieux encore, égale à 25 mmol/L et dont le pH est compris entre 4 et 8 et, mieux encore, est égal à 6 ± 0,5.

L'éluat ainsi obtenu - ou solution aqueuse A2 - comprend donc le radioisotope mais sous forme complexée.

Aussi, l'étape b) vise-t-elle à dissocier les complexes du radioisotope présents dans l'éluat en vue de pouvoir, à l'étape c), charger la deuxième phase stationnaire avec une solution aqueuse comprenant le radioisotope décomplexé ou, autrement dit, libre.

Conformément à l'invention, cette dissociation est réalisée en modifiant le pH de la solution aqueuse A2 de sorte à amener ce pH à une valeur à laquelle la capacité de l'agent complexant à complexer le radioisotope est diminuée ou nulle.

Ainsi, par exemple, si l'agent complexant est l'EDTA ou l'un de ses sels, la dissociation des complexes du radioisotope est réalisée par acidification de la solution aqueuse A2 pour amener le pH de cette solution à une valeur à laquelle l'EDTA se trouve majoritairement sous forme cationique, c'est-à-dire au plus égale à 1.

Cette acidification peut être réalisée par un simple ajout d'un acide, par exemple de l'acide nitrique ou chlorhydrique, à la solution aqueuse A2.

Toutefois, dans le cadre de l'invention, l'acidification de la solution aqueuse A2 est préférentiellement réalisée en effectuant au moins un lavage de la première phase stationnaire avec une solution aqueuse acide, par exemple d'acide nitrique ou chlorhydrique, et en ajoutant tout ou partie de la solution aqueuse issue de ce lavage à la solution aqueuse A2.

Plus encore, pour acidifier la solution aqueuse A2, on préfère laver deux fois la première phase stationnaire :
- une première fois avec une solution aqueuse acide dont la concentration en acide est convenablement choisie pour que le lavage ne favorise pas la rétention par la première phase stationnaire des complexes du radioisotope et des éventuelles traces du radioisotope non complexé retenus dans le volume interstitiel de la première phase stationnaire ;
- une deuxième fois avec une solution aqueuse acide typiquement d'acidité plus élevée que la précédente.

En effet, il est avantageux de procéder de la sorte car cela permet non seulement d'acidifier la solution aqueuse A2 mais également de récupérer les complexes du radioisotope et des éventuelles traces du radioisotope non complexé retenus dans le volume interstitiel de la première phase stationnaire.

Lorsque l'acidification de la solution aqueuse A2 est réalisée par addition d'une ou plusieurs solutions issues du lavage de la première phase stationnaire, alors le procédé peut comprendre, entre les étapes b) et c), un contrôle du pH de la solution aqueuse A3 qui est obtenue à l'issue de cette acidification et, si nécessaire, un ajustement de ce pH à une valeur au plus égale à 1 par addition d'un acide, par exemple de l'acide nitrique ou chlorhydrique.

À l'étape c), le chargement de la deuxième phase stationnaire avec la solution aqueuse A3 consiste avantageusement en une simple circulation de cette solution dans la deuxième colonne de chromatographie mais que l'on réalise, de préférence, à un faible débit, par exemple de 0,1 mL/min à 5 mL/min, de sorte à favoriser la rétention du radioisotope en tête de colonne.

Comme précédemment mentionné, à l'étape d), la deuxième phase stationnaire est soumise à au moins un lavage avec une solution aqueuse A4 pour, d'une part, éliminer l'agent complexant libre qui est retenu dans le volume interstitiel de la deuxième phase stationnaire et, d'autre part, conditionner la deuxième phase stationnaire en vue de l'utilisation ultérieure de la deuxième colonne de chromatographie, par exemple comme générateur de radioisotope(s).

La solution aqueuse A4 est, de préférence, une solution aqueuse acide, par exemple d'acide nitrique ou chlorhydrique, dont la concentration est convenablement choisie pour éviter que l'agent complexant retenu dans le volume interstitiel de la deuxième phase stationnaire ne précipite tout en maintenant la rétention du radioisotope par cette phase stationnaire à son optimum.

Ainsi, si l'agent complexant est l'EDTA ou l'un de ses sels, la concentration en acide de la solution aqueuse A4 est avantageusement comprise entre 0,5 mol/L et 4 mol/L et, mieux encore, égale à 0,5 mol/L si l'acide est de l'acide nitrique, tandis qu'elle est avantageusement comprise entre 2 mol/L et 4 mol/L et, mieux encore, égale à 2 mol/L si l'acide est de l'acide chlorhydrique.

Conformément à l'invention, le procédé peut comprendre de plus, avant l'étape a), une étape de conditionnement de la première phase stationnaire, c'est-à-dire une étape visant à amener l'acidité, qui règne dans le volume interstitiel cette phase du fait de son usage antérieur, à une valeur propre à éviter, au cours de l'étape a), tout risque de précipitation de l'agent complexant présent dans la solution aqueuse A1.

Typiquement, ce conditionnement est réalisé en lavant la première phase stationnaire avec une solution aqueuse acide, par exemple d'acide nitrique ou chlorhydrique, dont l'acidité est inférieure à celle qui règne dans le volume interstitiel de la première phase stationnaire.

Chacune des première et deuxième phases stationnaires est constituée d'un matériau de phase stationnaire, lequel peut être identique pour les deux phases ou, au contraire, différent d'une phase à l'autre selon la finalité du transfert du radioisotope.

Ainsi, par exemple, si le transfert du radioisotope est effectué dans le cadre d'une maintenance préventive d'un générateur de radium-224, c'est-à-dire pour anticiper les fuites en thorium-228 de ce générateur, alors les première et deuxième phases stationnaires sont constituées du même matériau de phase stationnaire.

En revanche, si, par exemple, le transfert du radioisotope est effectué pour obtenir des profils d'élutions différents pour ses descendants, ou pour déplacer ce radioisotope sur une phase stationnaire plus résistante aux radiations que celle sur laquelle il se trouve, alors les première et deuxième phases stationnaires peuvent être constituées de deux matériaux de phase stationnaire différents.

Comme connu en soi, le ou les matériaux de phase stationnaire peuvent comprendre un support solide minéral (tel que des particules de silice ou d'alumine ou un gel de silice), organique (tel qu'un polymère ou copolymère) ou inorganique-organique qui est fonctionnalisé, par exemple par greffage ou imprégnation, par des molécules organiques capables de retenir par complexation, échange d'ions, reconnaissance moléculaire ou tout autre mécanisme, les ions de l'élément chimique dont le radioisotope est un isotope radioactif, par exemple, les ions thorium si le radioisotope est le thorium-228.

Dans un mode de mise en œuvre particulièrement préféré de l'invention, le radioisotope est le thorium-228, auquel cas la première phase stationnaire et/ou la deuxième phase stationnaire est (sont), de préférence, constituée(s) de particules comprenant un polymère fonctionnalisé par des molécules d'un ligand du thorium.

Avantageusement, le polymère est un polyméthacrylate ou un poly(styrène-*co-*divinylbenzène), tandis que le ligand du thorium-228 est le *N,N,N',N'*-tétraoctyl-diglycolamide (ou TODGA), l'acide di(2-éthylhexyl)phosphorique (ou HDEHP), l'oxyde de trioctylphosphine (ou TOPO) ou un mélange de ceux-ci.

Des matériaux de phase stationnaire de ce type sont notamment disponibles auprès des sociétés Triskem International et Eichrom.

Conformément à l'invention, le procédé peut avantageusement être mis en œuvre pour réaliser la maintenance d'une pluralité (au moins deux) générateurs (i.e. plusieurs premières colonnes) à partir desquels on collecte une pluralité d'éluats (étape a) du procédé) qui, après traitement (étape b) du procédé), sont chargés (étape c) du procédé) dans une même deuxième colonne, laquelle constitue, après lavage (étape d) du procédé), un générateur neuf.

D'autres caractéristiques et avantages du procédé de l'invention apparaîtront à la lecture du complément de description qui suit et qui se rapporte à un exemple de mise en œuvre de ce procédé.

Il va de soi que ce mode de mise en œuvre n'est donné qu'à titre d'illustration de l'objet de l'invention et ne constitue en aucun cas une limitation de cet objet.

### BRÈVE DESCRIPTION DES FIGURES

La figure 1, déjà commentée, représente la chaîne de décroissance radioactive du thorium-232.
La figure 2 représente schématiquement les différentes étapes d'un exemple de mise en œuvre du procédé de l'invention.

### EXPOSÉ DÉTAILLÉ D'UN MODE DE MISE EN ŒUVRE PARTICULIER

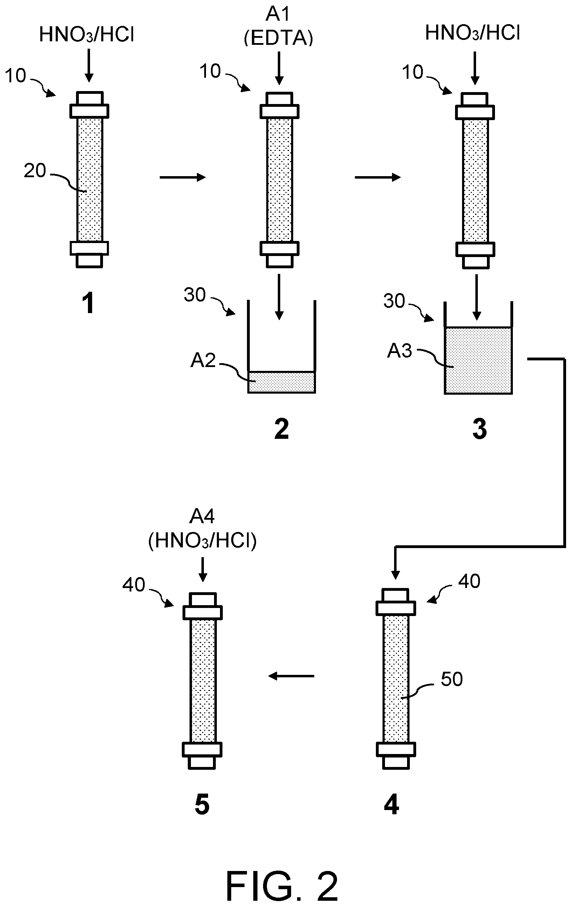

On se réfère à la figure 2 qui représente schématiquement les différentes étapes d'un exemple de mise en œuvre du procédé de l'invention pour le transfert de thorium-228 d'une première résine DGA DN, notée 20, contenue dans une première colonne de chromatographie, notée 10, vers une deuxième résine DGA DN, notée 50, contenue dans une deuxième colonne de chromatographie 40.

La première colonne de chromatographie 10 est, par exemple, un générateur de radium-224 usagé tandis que la deuxième colonne de chromatographie 40 est, elle, destinée à constituer un générateur neuf de radium-224.

Dans ce mode de mise en œuvre, le procédé comprend les étapes suivantes :
1. le conditionnement de la résine 20 avec une solution aqueuse d'acide nitrique ou chlorhydrique ;
2. l'élution du thorium-228 fixé sur la résine 20 avec une solution aqueuse A1 qui comprend de l'EDTA, et le recueil dans un récipient, noté 30, de type bêcher, fiole ou analogue, de l'éluat - ou solution aqueuse A2 - comprenant du thorium-228 sous la forme de complexes EDTA-²²⁸Th ;
3. la dissociation des complexes EDTA-²²⁸Th par acidification de l'éluat pour amener son pH à une valeur au plus égale à 1, moyennant quoi on obtient une solution aqueuse A3 comprenant du thorium-228 décomplexé ;
4. le chargement de la résine 50 avec la solution aqueuse A3 pour fixer sur cette résine le thorium-228 décomplexé présent dans cette solution ; et
5. un lavage de la phase stationnaire 50 avec une solution aqueuse A4 d'acide nitrique ou chlorhydrique.

Toutes ces étapes, qui sont détaillées ci-après, sont effectuées à température ambiante, c'est-à-dire à une température de 20 °C à 25 °C.

### ^{∗} Étape 1 :

La colonne 10 comprend une résine DGA DN (Triskem International/Eichrom) 20 chargée en thorium-228.

Ce type de résine, qui se présente sous la forme de particules, retient le thorium, quel qu'en soit l'isotope, mais ne retient pas le radium, quel qu'en soit l'isotope.

La résine 20 a été soumise à plusieurs cycles de production de radium-224 comprenant chacun une période pendant laquelle on a laissé le thorium-228 produire du radium-224 par décroissance radioactive suivie d'une élution du radium-224 ainsi produit.

Ces élutions ayant été réalisées avec des solutions d'acide nitrique à 2 mol/L ou d'acide chlorhydrique à 3 mol/L, la résine 20 est tout d'abord conditionnée pour abaisser l'acidité régnant dans le volume interstitiel de cette résine de sorte à éviter que l'EDTA utilisé à l'étape 2 ci-après ne précipite au cours de cette étape.

Ce conditionnement est réalisé en faisant circuler dans la colonne 10 plusieurs BV, par exemple 3 BV, à un débit compris entre 0,1 mL/min et 5 mL/min, d'une solution aqueuse qui comprend soit de l'acide nitrique soit de l'acide chlorhydrique - avec une préférence pour l'acide nitrique - à une concentration sensiblement inférieure ou égale à celle présentée par les solutions ayant été utilisées pour les élutions du radium-224.

Cette concentration est, par exemple, de 0,5 mol/L pour une solution aqueuse d'acide nitrique et de 2 mol/L pour une solution aqueuse d'acide chlorhydrique.

### ^{∗} Étape 2 :

L'élution du thorium-228 de la résine 20 est réalisée en faisant circuler dans la colonne 10 plusieurs BV de solution aqueuse A1, laquelle comprend typiquement de 10 mmol/L à 100 mmol/L et, de préférence, 25 mmol/L d'EDTA et présente un pH de 4 à 8 et, de préférence, égal à 6 ± 0,5.

Pour une élution optimale, 10 BV de solution aqueuse A1 sont utilisés à un débit allant de 0,1 mL/min à 5 mL/min et, de préférence, égal à 1 mL/min, les 10 BV pouvant être mis à circuler de façon continue (c'est-à-dire en une seule fois) ou de façon discontinue, c'est-à-dire en deux fois séparées l'une de l'autre par une pause de quelques minutes.

### ^{∗} Étape 3 :

Comme précédemment indiqué, cette étape consiste à acidifier l'éluat - ou solution aqueuse A2 - recueilli à l'étape 2 dans le récipient 30 pour amener le pH de cet éluat à une valeur au plus égale à 1.

Cette acidification permet non seulement d'obtenir une dissociation des complexes EDTA-²²⁸Th présents dans l'éluat puisque l'EDTA est sous forme cationique à un pH égal ou inférieur à 1 mais également de conférer à l'éluat un pH favorable à une rétention du thorium-228 sur une résine DGA DN. Ces deux effets conjugués permettent donc de refixer le thorium-228 sur la résine 50 à l'étape 4 ci-après.

L'acidification de l'éluat peut être réalisée :
- soit par un simple ajout d'acide nitrique ou chlorhydrique - avec une préférence pour l'acide nitrique - à l'éluat présent dans le récipient 30 ;
- soit, comme illustré sur la figure 2, en soumettant la résine 20 à deux lavages successifs, chacun de ces lavages étant réalisé avec une solution aqueuse acide, et à ajouter les solutions issues de ces lavages à l'éluat présent dans le récipient 30.

Le premier lavage est, par exemple, réalisé en faisant circuler dans la colonne 10 plusieurs BV, par exemple 3 BV, d'une solution aqueuse comprenant :
- soit de 0,01 mol/L à 0,1 mol/L et, de préférence, 0,1 mol/L d'acide nitrique ;
- soit de 0,1 mol/L à 1 mol/L et, de préférence, 0,1 mol/L d'acide chlorhydrique.

Le deuxième lavage est, par exemple, réalisé en faisant circuler dans la colonne 10 plusieurs BV, par exemple 3 BV, d'une solution aqueuse comprenant :
- soit de 0,5 mol/L à 4 mol/L et, de préférence, 0,5 mol/L d'acide nitrique ;
- soit de 2 mol/L à 4 mol/L et, de préférence, 2 mol/L d'acide chlorhydrique.

Dans les deux cas, préférence est donnée, là également, à des solutions aqueuses d'acide nitrique.

Les débits de circulation dans la colonne 10 des solutions aqueuses utilisées pour les lavages sont avantageusement de 0,1 mL/min à 5 mL/min.

Comme illustré sur la figure 2, les solutions issues des lavages peuvent être directement recueillies, en sortie de colonne 10, dans le récipient 30 dans lequel se trouve l'éluat.

En variante, elles peuvent être recueillies dans un récipient autre que le récipient 30 et être ensuite ajoutées à l'éluat présent dans le récipient 30.

Il est à noter qu'au cours de l'acidification de l'éluat, l'EDTA peut précipiter puis se redissoudre quasi intégralement. Aussi, quelles que soient les modalités choisies pour acidifier l'éluat, il est préférable que cette acidification soit réalisée sous agitation pour garantir une homogénéité de l'éluat acidifié - ou solution aqueuse A3 - et, donc, sa stabilité, une fois l'EDTA redissous.

Par mesure de prudence, la solution aqueuse A3 peut éventuellement être filtrée, par exemple au moyen d'un filtre de porosité de 0,2 µm, avant de procéder à l'étape 4.

### ^{∗} Étape 4 :

La colonne 40 est, de préférence, une colonne identique en tout point à la colonne 10, avec le même volume de lit et la même quantité massique de résine DGA DN, à ceci près que cette résine est vierge de toute utilisation antérieure.

Le chargement de la colonne 40 avec la solution aqueuse A3 est réalisé en faisant circuler cette solution dans la colonne 40, de préférence à un faible débit, par exemple de 0,1 mL/min à 5 mL/min, pour favoriser la rétention du thorium-228 en tête de colonne.

### ^{∗} Étape 5 :

Le lavage de la résine 50 est réalisé en faisant circuler dans la colonne 40 plusieurs BV de solution aqueuse A4, laquelle comprend typiquement :
- de 0,5 mol/L à 4 mol/L et, de préférence, 0,5 mol/L d'acide nitrique, ou
- de 2 mol/L à 4 mol/L et, de préférence, 2 mol/L d'acide chlorhydrique.

Là encore, préférence est donnée à l'acide nitrique.

Pour un lavage optimal, 20 BV de solution aqueuse A4 sont utilisés à un débit allant de 0,1 mL/min à 5 mL/min et, de préférence, égal à 2,5 mL/min.

La mise en œuvre du procédé de l'invention en utilisant une colonne 10 et une colonne 40 présentant chacune un BV de 7,2 mL et contenant chacune 3,3 g de résine DGA DN (taille des particules : 50-100 µm) ainsi que les paramètres opératoires suivants :
* étape 1 : conditionnement de la résine 20 par circulation dans la colonne 10 de 5 BV d'une solution aqueuse comprenant 0,5 mol/L d'acide nitrique, à un débit de 0,5 mL/min ;
* étape 2 : élution du thorium-228 par circulation dans la colonne 10 de 10 BV d'une solution aqueuse A1 comprenant 25 mmol/L d'EDTA et de pH égal à 6 ± 0,5, à un débit de 1 mL/min ;
* étape 3 : ajout à la solution aqueuse A2 issue de l'étape 2 de 2 BV d'une solution d'acide nitrique comprenant environ 14 mol/L d'HNO₃ (i.e. 65 % en masse) ;
* étape 4 : chargement de la résine 50 par circulation dans la colonne 40 des 12 BV obtenus à l'étape 3, à un débit de 2,5 mL/min ;
* étape 5 : lavage de la résine 50 par circulation dans la colonne 40 de 5 BV d'une solution aqueuse A4 comprenant 0,5 mol/L d'acide nitrique, à un débit de 0,5 mL/min ;
a permis de transférer plus de 99 % de l'activité du thorium-228 qui était retenue par la résine contenue dans la colonne 10 au temps t0 de la mise en œuvre du procédé sur la résine contenue dans la colonne 40.

## Revendications

1. Procédé de transfert d'un radioisotope qui est fixé sur une première phase stationnaire (20) contenue dans une première colonne de chromatographie (10) vers une deuxième phase stationnaire (50) contenue dans une deuxième colonne de chromatographie (40), pour fixer le radioisotope sur la deuxième phase stationnaire, le radioisotope étant choisi parmi les isotopes radioactifs du thorium, du radium, du plomb, du bismuth et de l'uranium, qui comprend au moins les étapes suivantes :
a) élution du radioisotope de la première phase stationnaire (20) avec une solution aqueuse A1 comprenant un agent complexant le radioisotope, moyennant quoi on obtient une solution aqueuse A2 qui comprend des complexes du radioisotope ;
b) dissociation des complexes du radioisotope présents dans la solution aqueuse A2 par modification du pH de la solution aqueuse A2, moyennant quoi on obtient une solution aqueuse A3 comprenant le radioisotope décomplexé ;
c) chargement de la deuxième phase stationnaire (50) avec la solution aqueuse A3 ; et
d) au moins un lavage de la deuxième phase stationnaire (50) avec une solution aqueuse A4.

2. Procédé selon la revendication 1, dans lequel l'agent complexant le radioisotope est un acide aminopolycarboxylique ou un sel d'un acide aminopolycarboxylique.

3. Procédé selon la revendication 2, dans lequel l'acide aminopolycarboxylique est l'acide nitrilotriacétique, l'acide éthylènediaminetétraacétique ou l'acide diéthylènetriaminepentaacétique et, de préférence, l'acide éthylènediaminetétraacétique.

4. Procédé selon l'une quelconque des revendications 1 à 3, dans lequel la solution aqueuse A1 comprend de 10 mmol/L à 100 mmol/L d'acide éthylène diaminetétraacétique ou d'un sel de celui-ci et a un pH de 4 à 8.

5. Procédé selon la revendication 4, dans lequel la solution aqueuse A1 comprend 25 mmol/L d'acide éthylène diaminetétraacétique ou d'un sel de celui-ci et a un pH de 6 ± 0,5.

6. Procédé selon l'une quelconque des revendications 1 à 5, dans lequel la modification du pH de la solution aqueuse A2 est une acidification pour amener le pH de la solution aqueuse A2 à une valeur au plus égale à 1.

7. Procédé selon la revendication 6, dans lequel l'acidification de la solution aqueuse A2 comprend l'ajout d'un acide à la solution aqueuse A2 et, de préférence, d'acide nitrique ou chlorhydrique.

8. Procédé selon la revendication 6 dans lequel l'acidification de la phase aqueuse A2 comprend au moins un lavage de la première phase stationnaire (20) avec une solution aqueuse acide et un ajout de tout ou partie de la solution aqueuse issue du lavage à la solution aqueuse A2.

9. Procédé selon la revendication 8, dans lequel la solution aqueuse acide comprend de 0,01 mol/L à 0,1 mol/L d'acide nitrique ou de 0,1 mol/L à 1 mol/L d'acide chlorhydrique.

10. Procédé selon l'une quelconque des revendications 1 à 9, dans lequel la solution aqueuse A4 comprend de 0,5 mol/L à 4 mol/L d'acide nitrique ou de 2 mol/L à 4 mol/L d'acide chlorhydrique.

11. Procédé selon l'une quelconque des revendications 1 à 10, qui comprend de plus, avant l'étape a), une étape de conditionnement de la première phase stationnaire.

12. Procédé selon l'une quelconque des revendications 1 à 11, dans lequel la première phase stationnaire est constituée d'un premier matériau de phase stationnaire, la deuxième phase stationnaire est constituée d'un deuxième matériau de phase stationnaire et les premier et deuxième matériaux de phase stationnaire sont identiques.

13. Procédé selon l'une quelconque des revendications 1 à 11, dans lequel la première phase stationnaire est constituée d'un premier matériau de phase stationnaire, la deuxième phase stationnaire est constituée d'un deuxième matériau de phase stationnaire et les premier et deuxième matériaux de phase stationnaire sont différents.

14. Procédé selon l'une quelconque des revendications 1 à 13, dans lequel le radioisotope est le thorium-228.

15. Procédé selon la revendication 14, dans lequel la première phase stationnaire et/ou la deuxième phase stationnaire est (sont) constituée(s) de particules comprenant un polymère fonctionnalisé par des molécules d'un ligand du thorium.

16. Procédé selon la revendication 15, dans lequel le polymère est un polyméthacrylate ou un poly(styrène-co-divinylbenzène), et le ligand du thorium-228 est le *N,N,N',N'*-tétraoctyldiglycolamide, l'acide di(2-éthylhexyl)phosphorique, l'oxyde de trioctylphosphine ou un mélange de ceux-ci.

## Patentansprüche

1. Verfahren zum Transfer eines Radioisotops, das auf einer ersten stationären Phase (20) fixiert ist, die in einer ersten Chromatographiesäule (10) enthalten ist, zu einer zweiten stationären Phase (50), die in einer zweiten Chromatographiesäule (40) enthalten ist, um das Radioisotop auf der zweiten stationären Phase zu fixieren, wobei das Radioisotop aus radioaktiven Thorium-, Radium-, Blei-, Wismut- und Uran-Isotopen ausgewählt ist, das mindestens die folgenden Schritte umfasst:
a) Elutieren des Radioisotops der ersten stationären Phase (20) mit einer wässrigen Lösung A1, umfassend ein Mittel, das das Radioisotop komplexiert, wodurch eine wässrige Lösung A2 erhalten wird, die die Komplexe des Radioisotops umfasst;
b) Dissoziieren von Komplexen des Radioisotops, die in der wässrigen Lösung A2 vorliegen, durch Modifikation des pH-Werts der wässrigen Lösung A2, wodurch eine wässrige Lösung A3 erhalten wird, die das dekomplexierte Radioisotop umfasst;
c) Laden der zweiten stationären Phase (50) mit der wässrigen Lösung A3 und
d) mindestens ein Waschen der zweiten stationären Phase (50) mit einer wässrigen Lösung A4.

2. Verfahren nach Anspruch 1, wobei das Mittel, das das Radioisotop komplexiert, eine Aminopolycarbonsäure oder ein Salz einer Aminopolycarbonsäure ist.

3. Verfahren nach Anspruch 2, wobei die Aminopolycarbonsäure Nitrilotriessigsäure, Ethylendiamintetraessigsäure oder Diethylentriaminpentaessigsäure und vorzugsweise Ethylendiamintetraessigsäure ist.

4. Verfahren nach einem der Ansprüche 1 bis 3, wobei die wässrige Lösung A1 10 mmol/L bis 100 mmol/L Ethylendiamintetraessigsäure oder eines Salzes dieser umfasst und einen pH-Wert von 4 bis 8 aufweist.

5. Verfahren nach Anspruch 4, wobei die wässrige Lösung A1 25 mmol/L Ethylendiamintetraessigsäure oder eines Salzes dieser umfasst und einen pH-Wert von 6 ± 0,5 aufweist.

6. Verfahren nach einem der Ansprüche 1 bis 5, wobei die Modifikation des pH-Werts der wässrigen Lösung A2 eine Säuerung ist, um den pH-Wert der wässrigen Lösung A2 auf einen Wert von höchstens gleich 1 zu bringen.

7. Verfahren nach Anspruch 6, wobei die Säuerung der wässrigen Lösung A2 das Zugeben einer Säure zu der wässrigen Lösung A2 und vorzugsweise von Salpeter- oder Salzsäure umfasst.

8. Verfahren nach Anspruch 6, wobei die Säuerung der wässrigen Phase A2 mindestens ein Waschen der ersten stationären Phase (20) mit einer wässrigen sauren Lösung und ein Zugeben der gesamten oder eines Teils der wässrigen Lösung, die aus dem Waschen mit der wässrigen Lösung A2 hervorgeht, umfasst.

9. Verfahren nach Anspruch 8, wobei die wässrige saure Lösung 0,01 mol/L bis 0,1 mol/L Salpetersäure oder 0,1 mol/L bis 1 mol/L Salzsäure umfasst.

10. Verfahren nach einem der Ansprüche 1 bis 9, wobei die wässrige Lösung A4 0,5 mol/L bis 4 mol/L Salpetersäure oder 2 mol/L bis 4 mol/L Salzsäure umfasst.

11. Verfahren nach einem der Ansprüche 1 bis 10, das außerdem vor dem Schritt a) einen Schritt eines Konditionierens der ersten stationären Phase umfasst.

12. Verfahren nach einem der Ansprüche 1 bis 11, wobei die erste stationäre Phase aus einem ersten stationären Phasenmaterial besteht, die zweite stationäre Phase aus einem zweiten stationären Phasenmaterial besteht und das erste und das zweite stationäre Phasenmaterial identisch sind.

13. Verfahren nach einem der Ansprüche 1 bis 11, wobei die erste stationäre Phase aus einem ersten stationären Phasenmaterial besteht, die zweite stationäre Phase aus einem zweiten stationären Phasenmaterial besteht und das erste und das zweite stationäre Phasenmaterial unterschiedlich sind.

14. Verfahren nach einem der Ansprüche 1 bis 13, wobei das Radioisotop Thorium-228 ist.

15. Verfahren nach Anspruch 14, wobei die erste stationäre Phase und/oder die zweite stationäre Phase aus Teilchen bestehen, die ein Polymer umfassen, das durch Moleküle eines Liganden von Thorium funktionalisiert ist.

16. Verfahren nach Anspruch 15, wobei das Polymer ein Polymethacrylat oder ein Poly(styrol-co-divinylbenzol) ist und der Ligand von Thorium-228 *N,N,N',N'*-Tetraoctyldiglycolamid, Di-(2-ethylhexyl)phosphorsäure, Trioctylphosphinoxid oder ein Gemisch dieser ist.

## Claims

1. Method for transferring a radioisotope which is fixed on a first stationary phase (20) contained in a first chromatography column (10) to a second stationary phase (50) contained in a second chromatography column (40), to fix the radioisotope on the second stationary phase, the radioisotope being selected from the radioactive isotopes of thorium, radium, lead, bismuth and uranium, which comprises at least the following steps:
a) eluting the radioisotope from the first stationary phase (20) with an aqueous solution A1 comprising an agent complexing the radioisotope, whereby an aqueous solution A2 which comprises complexes of the radioisotope is obtained;
b) dissociating the complexes of the radioisotope present in the aqueous solution A2 by modifying the pH of the aqueous solution A2, whereby an aqueous solution A3 comprising the decomplexed radioisotope is obtained;
c) loading the second stationary phase (50) with the aqueous solution A3; and
d) washing at least once the second stationary phase (50) with an aqueous solution A4.

2. Method according to claim 1, wherein the agent complexing the radioisotope is an aminopolycarboxylic acid or an aminopolycarboxylic acid salt.

3. Method according to claim 2, wherein the aminopolycarboxylic acid is nitrilotriacetic acid, ethylenediaminetetraacetic acid or diethylenetriaminepentaacetic acid and, preferably, ethylenediaminetetraacetic acid.

4. Method according to any one of claims 1 to 3, wherein the aqueous solution A1 comprises from 10 mmol/L to 100 mmol/L of ethylenediaminetetraacetic acid or a salt thereof and has a pH of 4 to 8.

5. Method according to claim 4, wherein the aqueous solution A1 comprises 25 mmol/L of ethylenediaminetetraacetic acid or a salt thereof and has a pH of 6 ± 0.5.

6. Method according to any one of claims 1 to 5, wherein the modification of the pH of the aqueous solution A2 is an acidification to bring the pH of the aqueous solution A2 to a value at most equal to 1.

7. Method according to claim 6, wherein the acidification of the aqueous solution A2 comprises the addition of an acid to the aqueous solution A2 and, preferably, of nitric or hydrochloric acid.

8. Method according to claim 6, wherein the acidification of the aqueous phase A2 comprises at least one washing of the first stationary phase (20) with an acidic aqueous solution and an addition of all or part of the aqueous solution issued from the washing to the aqueous solution A2.

9. Method according to claim 8, wherein the acidic aqueous solution comprises from 0.01 mol/L to 0.1 mol/L of nitric acid or from 0.1 mol/L to 1 mol/L of hydrochloric acid.

10. Method according to any one of claims 1 to 9, wherein the aqueous solution A4 comprises from 0.5 mol/L to 4 mol/L of nitric acid or from 2 mol/L to 4 mol/L of hydrochloric acid.

11. Method according to any one of claims 1 to 10, which further comprises, before step a), a step of conditioning the first stationary phase.

12. Method according to any one of claims 1 to 11, wherein the first stationary phase consists of a first stationary phase material, the second stationary phase consists of a second stationary phase material and the first and second stationary phase materials are identical.

13. Method according to any one of claims 1 to 11, wherein the first stationary phase consists of a first stationary phase material, the second stationary phase consists of a second stationary phase material and the first and second stationary phase materials are different.

14. Method according to any one of claims 1 to 13, wherein the radioisotope is thorium-228.

15. Method according to claim 14, wherein the first stationary phase and/or the second stationary phase consist(s) of particles comprising a polymer functionalised by molecules of a ligand of thorium.

16. Method according to claim 15, wherein the polymer is a polymethacrylate or a poly(styrene-co-divinylbenzene), and the ligand of thorium-228 is *N,N,N',N'-*tetraoctyldiglycolamide, di(2-ethylhexyl)phosphoric acid, trioctylphosphine oxide or a mixture thereof.
